# EUROPÄISCHE PATENTSCHRIFT

(11) **EP 0 924 145 B1**
(45) Veröffentlichungstag und Bekanntmachung des Hinweises auf die Patenterteilung: **26.03.2003**
(21) Anmeldenummer: 98123808.2
(22) Anmeldetag: 15.12.1998
(51) Int. Cl.: B65G 1/04, B65G 1/10, B66F 9/07

(54) **Regalsystem**
Shelf storage
Magasin à rayonnage

(30) Priorität: 16.12.1997 DE 29722172 U
(43) Veröffentlichungstag der Anmeldung: 23.06.1999
(73) Patentinhaber: GEBR. WILLACH GmbH, D-53809 Ruppichteroth (DE)
(72) Erfinder: Willach, Hansfriedrich, 53809 Ruppichteroth (DE); Schmitt, Werner, 53809 Ruppichteroth-Schönenberg (DE)
(74) Vertreter: Selting, Günther, Dipl.-Ing.

(56) Entgegenhaltungen:
- EP-A- 0 235 488
- EP-A- 0 431 823
- EP-A- 0 734 975
- WO-A-91/07338
- DE-U- 8 909 126

## Beschreibung

Die Erfindung betrifft ein Regalsystem, in dem Waren abgelegt werden können, wobei Informationen über die Ware und das jeweilige Fach gespeichert werden, um die Ware gezielt aus dem Fach entnehmen zu können.

Aus EP 0 734 975 A1 ist ein Regallager mit Ziehregalen bekannt. Bei diesem Regallager fährt ein Manipulator längs eines Mittelganges, zu dessen Seiten Ziehregale angeordnet sind, die einzeln in den Mittelgang hineingezogen werden können, so daß der Manipulator Zugriff auf das herausgezogene Ziehregal hat. Zum Beschicken des Regallagers ist ein Warenübernahme-Ziehregal vorgesehen, in das die Waren manuell eingelegt werden und das anschließend in dem Gang positioniert wird, wo der Manipulator auf die in dem Warenübernahme-Ziehregal abgelegten Waren zugreifen kann, um sie in Fächer der Ziehregale zu überführen. Bei dem bekannten Regalsystem sind die Waren in Hülsen enthalten, die jeweils eine Codierung tragen. Der Manipulator ist mit einem Lesegerät ausgestattet, das die auf den Hülsen angebrachten Codierungen liest und daraufhin die Hülse identifiziert. Anhand des Codes der Hülse wird dann auf die in der Hülse befindliche Ware geschlossen. Die Verwendung von Hülsen oder Transportbehältern in einem Regalsystem ist in mancherlei Hinsicht nachteilig.

Die Hülsen erfordern eine aufwendige Logistik, da sie von derjenigen Stelle, an der sie entleert werden, an diejenige Stelle zurücktransportiert werden müssen, an der sie gefüllt werden. Weiterhin ist es erforderlich, am Füllplatz der Hülsen zahlreiche Hülsen bereitzuhalten, was einen erheblichen Platzbedarf erfordert. Schließlich hat die Wiedererkennbarkeit der Hülse keine absolut zuverlässige Aussagekraft für die Identifizierung des Inhalts der Hülse. Dies kann insbesondere bei Bestandsaufnahmen des Lagers zu Fehlern führen. Ein weiterer Nachteil besteht darin, daß die manuell in einem Warenübernahme-Ziehregal abgelegten Hülsen anschließend von dem Manipulator identifiziert werden müssen, bevor sie in Speicherregale abgelegt werden. Zu dieser Identifizierung gehört auch das Auffinden des Fachs, in dem die Hülse abgelegt wurde.

Der vorliegenden Erfindung liegt die Aufgabe zugrunde, ein Regalsystem zu schaffen, das es ermöglicht, Waren ohne standardisierte Transportbehälter in Regalfächern abzulegen bzw. aus den Regalfächern zu entnehmen.

Die Lösung dieser Aufgabe erfolgt erfindungsgemäß mit den im Patentanspruch 1 angegebenen Merkmalen.

Bei dem erfindungsgemäßen Regalsystem dient zum Einbringen und Entnehmen von Waren ein Warenträger, der in Form und Größe dem Regalfach im wesentlichen angepaßt ist und der in das Regalfach eingeführt werden kann. Der Warenträger hat an dem vorderen Ende einer Längswand eine stumpfe Stoßkante und am vorderen Ende einer anderen Längswand eine spitze Unterfahrkante. Der Warenträger kann so in das Fach des Regals eingeführt werden, daß seine Stoßkante über den Fachboden streift. Befindet sich in dem Regalfach bereits eine Ware, so wird dies dadurch erkannt, daß die Stoßkante gegen die Ware stößt und der Warenträger somit nicht vollständig in das Fach eingeschoben werden kann. Befindet sich keine Ware in dem Fach, wird der Warenträger vollständig in das Fach eingeschoben. Anschließend wird der Warenträger wieder aus dem Fach herausgezogen, wobei eine am Regalfach und/oder am Warenträger vorgesehene Rückhaltevorrichtung dafür sorgt, daß die Ware von dem Warenträger abgestreift wird und im Regalfach verbleibt.

Zum Entnehmen von Ware aus einem Regalfach wird der Warenträger so in das Regalfach eingeführt, daß seine Unterfahrkante über den Fachboden streift. Die Unterfahrkante gelangt unter die auf dem Fachboden liegende Ware, so daß die an der Rückwand des Fachs abgestützte Ware auf den Warenträger gelangt, wobei dessen Unterfahrkante gewissermaßen eine Rampe bildet. Die Unterfahrkante ist eine sich nach vorne verjüngende, spitz zulaufende klingenartige Kante. Sie muß allerdings nicht durchgehend sein, sondern kann auch aus einzelnen Zinken bestehen. Ferner ist es möglich, den Fachboden zur Erleichterung des Unterfahrens der Ware nachgiebig zu gestalten, beispielsweise veloursartig oder als Schaumstoffunterlage. Der Fachboden kann auch Furchen enthalten, in die Zinken des Warenträgers eintauchen. In diesem Fall muß die Unterfahrkante nicht spitz zulaufen, aber dennoch dafür sorgen, daß die Ware auf die Tragfläche geleitet wird, wenn der Warenträger in das Regalfach vorgeschoben wird. Wichtig ist, daß der Warenträger eine erste Position einnehmen kann, in der die Stoßkante unten liegt, und eine zweite Position, in der die Unterfahrkante unten liegt. Die erste Position bildet die Ablageposition und die zweite Position die Entnahmeposition.

Der Warenträger ist Bestandteil einer Bedienungsvorrichtung. Diese Bedienungsvorrichtung kann manuell betätigt und geführt werden, um ein Regal, z.B. ein Warenübernahmeregal, zu beschiken oder Waren daraus zu entnehmen. Es ist aber auch möglich, daß die Bedienungsvorrichtung Bestandteil eines Manipulators ist, der den Warenträger unter Steuerung durch einen Computer automatisch in die jeweiligen Regalfächer einführt.

Gemäß einer bevorzugten Ausführungsform der Erfindung enthält der Warenträger einen Schieber, der beim Herausziehen des Warenträgers aus einem Fach an einem Rückhalteteil des Fachs angreift und dadurch das Zurückbewegen der Waren blockiert. Auf diese Weise wird beim Herausziehen des Warenträgers aus dem Regalfach der Warenträger automatisch entleert und die Ware wird im Regalfach zurückgehalten.

Eine besonders zweckmäßige Weiterbildung des erfindungsgemäßen Regalsystems sieht vor, daß an den Fächern maschinenlesbare Schilder derart angeordnet sind, daß ein an der Bedienungsvorrichtung befestigtes Lesegerät die Beschriftung des Schildes dann liest, wenn der Warenträger voll in das Fach eingeschoben ist. Nur wenn der Warenträger voll bis zum Ende in das Regalfach eingeschoben ist, wird der auf dem Schild stehende Identifizierungscode des Fachs gelesen und der Computer erhält eine Bestätigung dafür, daß die Ware abgelegt oder entnommen wurde. Ist es aus irgendeinem Grunde nicht möglich, den Warenträger voll in das Fach einzuführen, so wird der Ablage- oder Entnahmevorgang nicht bestätigt. Das Lesegerät kann außerdem dazu benutzt werden, eine Codierung an der Ware zu lesen, um die Beziehung zwischen der Ware und dem Regalfach herzustellen und im Computer zu speichern. Dadurch weiß der Computer zu jeder Zeit, welche Ware in welchem Regalfach liegt. Als Warencode kann der auf den Waren oder der Verpackung vorgesehene Barcode verwendet werden.

Die Erfindung schafft ein besonders einfaches und leicht zu handhabendes Regalsystem, das ohne Lagerbehälter auskommt und daher eine einfache Logistik ermöglicht. Der Warenträger, der Bestandteil der Bedienungsvorrichtung ist, dient gleichzeitig dazu, vorab festzustellen, ob die Ware in das betreffende Regalfach hineinpaßt. Paßt die Ware nämlich nicht in den Warenträger, so ist sie auch für das Regalfach zu groß. Es können Regalfächer unterschiedlicher Größen vorgesehen sein, wobei für jede Fachgröße ein anderer Warenträger benutzt wird. Die Warenträger haben somit gleichzeitig die Funktion einer Uniformierung oder Größenkontrolle.

Im folgenden wird unter Bezugnahme auf die Zeichnungen ein Ausführungsbeispiel der Erfindung näher erläutert.

Es zeigen:
- Fig. 1: einen Längsschnitt durch die Bedienungsvorrichtung,
- Fig. 2: einen Längsschnitt durch ein Regalfach mit eingeführter Bedienungsvorrichtung,
- Fig. 3: das Ablegen der Ware in dem Regalfach und das Herausziehen der Bedienungsvorrichtung,
- Fig. 4: einen Zustand, in dem sich in einem Regalfach bereits Ware befindet, während die Bedienungsvorrichtung eingeführt wird,
- Fig. 5: die Bedienungsvorrichtung im auseinandergenommenen Zustand zum Zwecke des Auswechselns des Warenträgers,
- Fig. 6: einen Längsschnitt durch ein Regalfach beim Einführen der Bedienungsvorrichtung zum Zwecke des Entnehmens der Ware und
- Fig. 7: die in das Regalfach eingeschobene Bedienungsvorrichtung beim Entnahmevorgang.

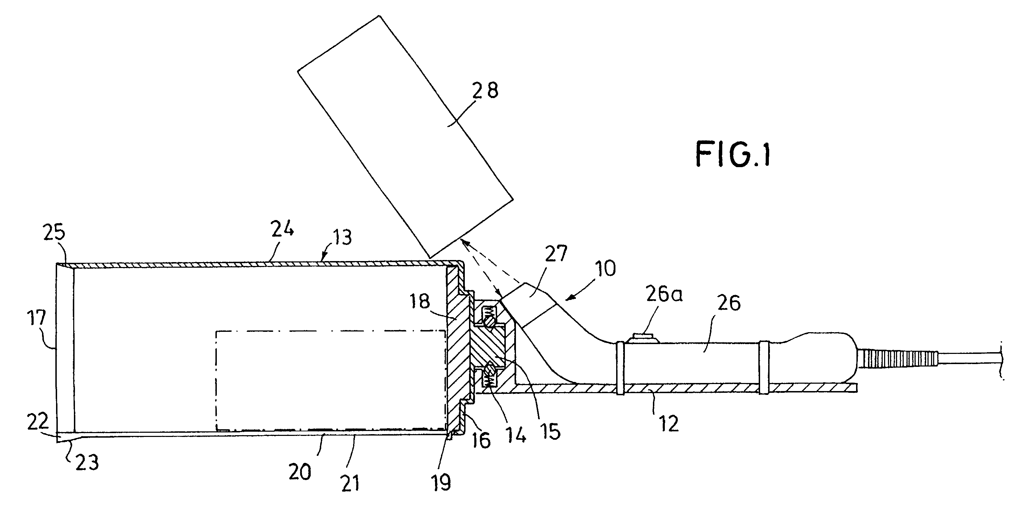

In Fig. 1 ist die Bedienungsvorrichtung 10 dargestellt, die dazu dient, ein Regal oder eine aus mehreren Regalen bestehende Regalanlage zu bedienen. Die Bedienungsvorrichtung ist im vorliegenden Fall eine manuelle Bedienungsvorrichtung, die von Hand bewegt wird. Es sei angenommen, daß das betreffende Regal 11 das Warenübernahmeregal eines Regallagers nach EP 0 734 975 A1 ist. Hierbei handelt es sich um ein Regallager, bei dem der Benutzer das Warenübernahmeregal manuell befüllt, während ein Manipulator die Waren aus dem Warenübernahmeregal entnimmt und in Speicherregale des Regallagers überführt.

Die Bedienungsvorrichtung 10 weist einen Tragarm 12 und einen Warenträger 13 auf. Der Warenträger 13 ist mit dem Tragarm 12 durch eine lösbare Kupplung 14 verbunden, die hier aus einer mit federgespannten Kugeln versehenen Rastkupplung besteht. Der Warenträger 13 weist einen Schaft 15 auf, der mit der Kupplung 14 zusammengreift und er kann um die Achse des Schafts 15 gedreht werden, wobei er in zwei um 180° zueinander versetzten Positionen einrastet.

Der Warenträger 13 besteht aus einer langgestreckten rechteckigen Hülse, die am rückwärtigen Ende mit einer Stirnwand 16 verschlossen und am gegenüberliegenden vorderen Ende 17 offen ist. Der Warenträger 13 enthält einen Schieber 18 aus einer Platte, die den Querschnitt des Warenträgers ausfüllt und die normalerweise an der rückwärtigen Stirnwand 16 anliegt. Der Schieber 18 ist mit einem abstehenden Ansatz 19 versehen, der durch einen Längsschlitz 20 in der einen Seitenwand 21 des Warenträgers hindurchragt. Die Seitenwand 21 wird am vorderen Ende durch eine stumpfe Stoßkante 22 begrenzt. Die Stoßkante 22 wird durch eine Verdickung der Seitenwand 21 gebildet, wobei die Außenfläche eine Schrägfläche 23 bildet, welche von der Außenfläche der Seitenwand 21 divergiert.

Die der Seitenfläche 21 gegenüberliegende Seitenfläche 24 weist eine spitze Unterfahrkante 25 auf, die nach Art einer Messerklinge ausgebildet ist. Bei dem vorliegenden Ausführungsbeispiel sind auch die zwischen den beiden Seitenwänden 21 und 24 liegenden Seitenwände mit einer Unterfahrkante versehen.

An dem Tragarm 12 der Bedienungsvorrichtung ist ein Lesegerät 26 befestigt, das einen Lesekopf 27 und einen Betätigungsknopf 26a aufweist. Der Lesekopf 27 ist von dem Tragarm 12 aus schräg nach vorne und oben (unter etwa 45°) gerichtet. Auf diese Weise kann die Codierung an einer Ware 28, die mit der Bedienungsvorrichtung in das Regalfach eingeführt werden soll, von dem Lesegerät 26 gelesen werden, wenn die Ware in die in Fig. 1 dargestellte Stellung gebracht wird. Nachdem die Codierung der Ware 28 gelesen wurde, wird die Ware 28 von Hand in das Vorderende des Warenträgers eingeführt.

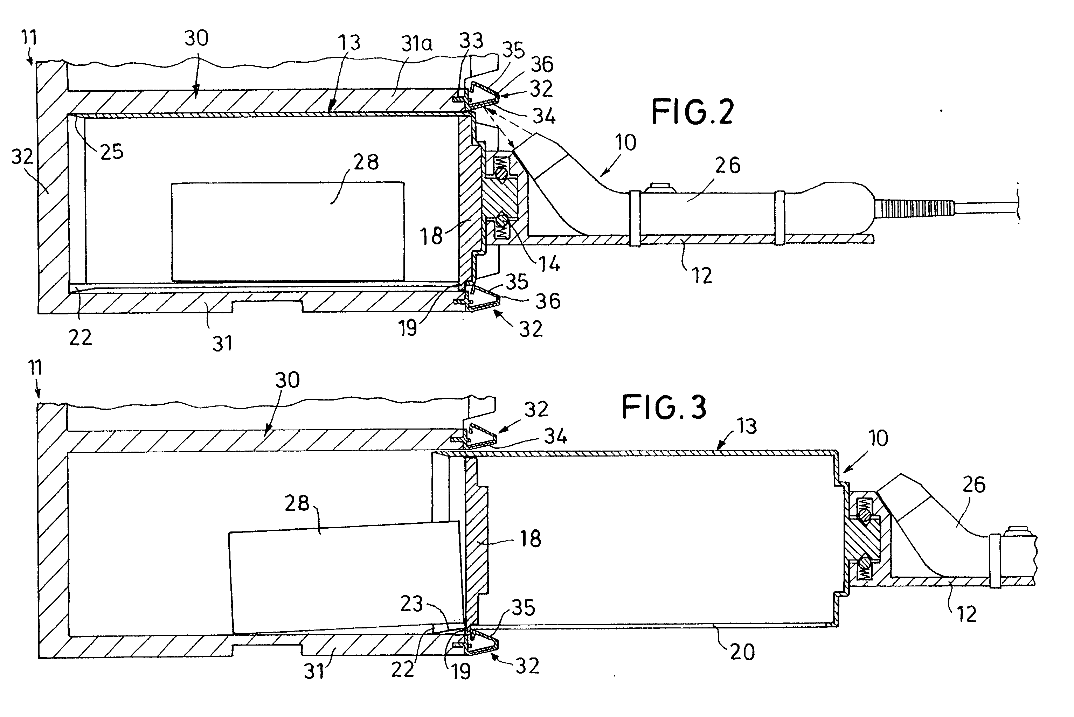

Fig. 2 zeigt den Zustand, daß der Warenträger 13 in ein Regalfach 30 eingeführt wurde. Das Regalfach 30 weist einen Fachboden 31 und eine Rückwand 32 auf und ist am vorderen Ende offen. Die Deckenwand 31a des Regalfachs bildet den Fachboden des darüberliegenden Regalfachs. An dem vorderen Ende der Deckenwand 31a ist ein Profilteil 32 befestigt, welches ein Befestigungsteil 33, ein Schild 34 und ein Rückhalteteil 35 aufweist. Das Schild 34 ist nach unten geneigt, so daß es von dem Lesegerät 26 der in das Regalfach eingesteckten Bedienungsvorrichtung gelesen werden kann. An dem Schild 34 befindet sich ein maschinenlesbarer Code, der das betreffende Regalfach 30 identifiziert.

Das äußere Ende des Schildes 34 geht über ein Gelenk 36 in das Rückhalteteil 35 für das darüberliegende Regalfach über. Das Rückhalteteil 35 besteht aus einem zurückragenden L-förmigen Steg, der schräg nach hinten und oben ragt.

Gemäß Fig. 2 wird der Warenträger 13 mit der darin befindlichen Ware 28 in das Fach 30 eingeführt, wobei die Stoßkante 22 über den Fachboden 31 streift, während die Unterfahrkante 25 entlang der Deckenwand streift. Das vollständige Einschieben wird dadurch erkannt, daß das Lesegerät 26 den Fachcode auf dem Schild 34 liest und in einen Computer eingibt. Beim Einschieben in das Fach hat der Ansatz 19 des Schiebers 18 das Rückhalteteil 35 passiert und dieses kurzzeitig nach unten gedrückt. Danach hat das elastische Gelenk 36 das Rückhalteteil 35 wieder aufgestellt.

Wird nun gemäß Fig. 3 der Warenträger 13 aus dem Fach 30 herausgezogen, so hält das Rückhalteteil 35 den Ansatz 19 des Schiebers 18 zurück, so daß der Schieber 18 stehenbleibt und die Ware 28 von dem Warenträger 13 abstreift. Die Ware 28 bleibt somit im Regalfach liegen. In der Endphase des Herausziehens des Warenträgers 13 gelangt die Schrägfläche 23 gegen das Rückhalteteil 35, so daß dieses heruntergedrückt wird und den Ansatz 19 des Schiebers 18 schließlich freigibt. Der Schieber 18, der mit einer gewissen Klemmung in dem Warenträger 13 enthalten ist, wird zusammen mit dem Warenträger aus dem Regalfach herausgezogen. Anschließend stellt sich das Rückhalteteil 35 wieder auf, wobei es den Fachboden 31 überragt, so daß es eine Stoßkante bildet, die verhindert, daß die Ware 28 aus dem Regalfach herausgleiten kann.

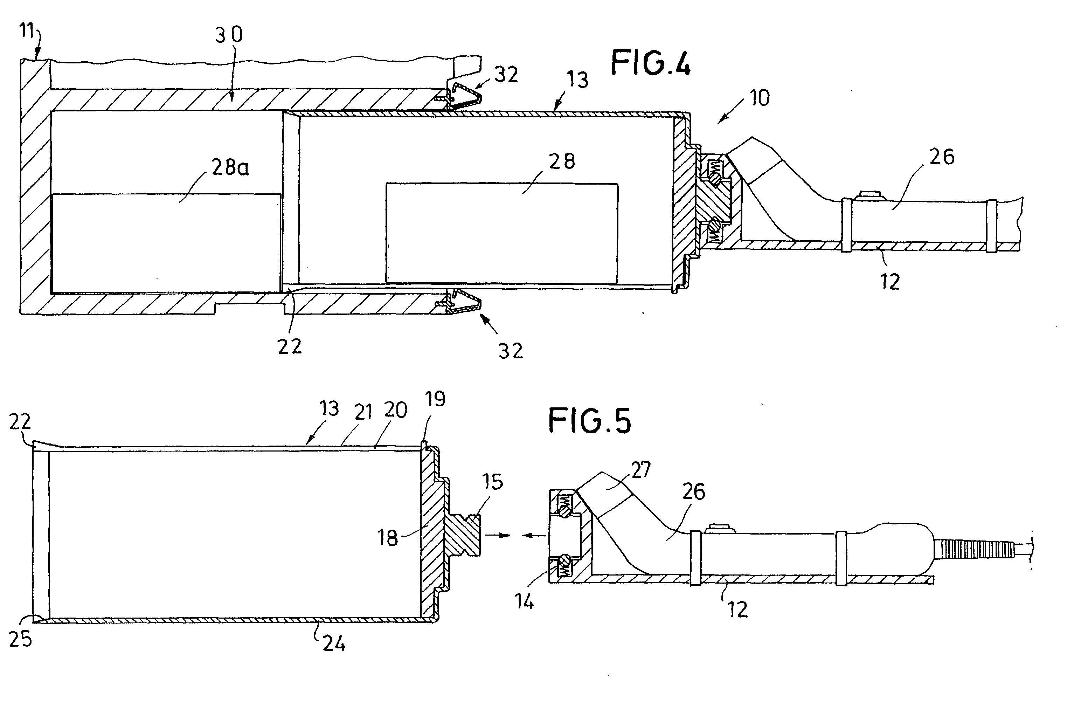

In Fig. 4 ist der Zustand dargestellt, daß bei dem Versuch, eine Ware 28 in dem Regalfach 30 abzulegen, bereits eine Ware 28a in dem Regalfach enthalten ist. Dabei stößt die Stoßkante 22 gegen die im Regalfach liegende Ware 28a, wodurch das weitere Einführen des Warenträgers 13 verhindert wird. Aufgrund dieser Blockierung wird verhindert, daß ein Regalfach doppelt benutzt wird.

Fig. 5 zeigt die Trennung des Warenträgers 13 von dem Tragarm 12 durch Lösen der Kupplung 14. Bei Bedarf kann der Tragarm 12 mit einem Warenträger anderer Größe gekuppelt werden. In jedem Fall ist jedoch der Warenträger auf die Größe des betreffenden Regalfachs 30 abgestimmt. Aus Fig. 5 ist weiterhin ersichtlich, daß der Warenträger 13 um 180° gedreht an den Tragarm 12 angekuppelt wird. Dabei liegt nunmehr die spitze Unterfahrkante 25 unten und die stumpfe Stoßkante 22 oben.

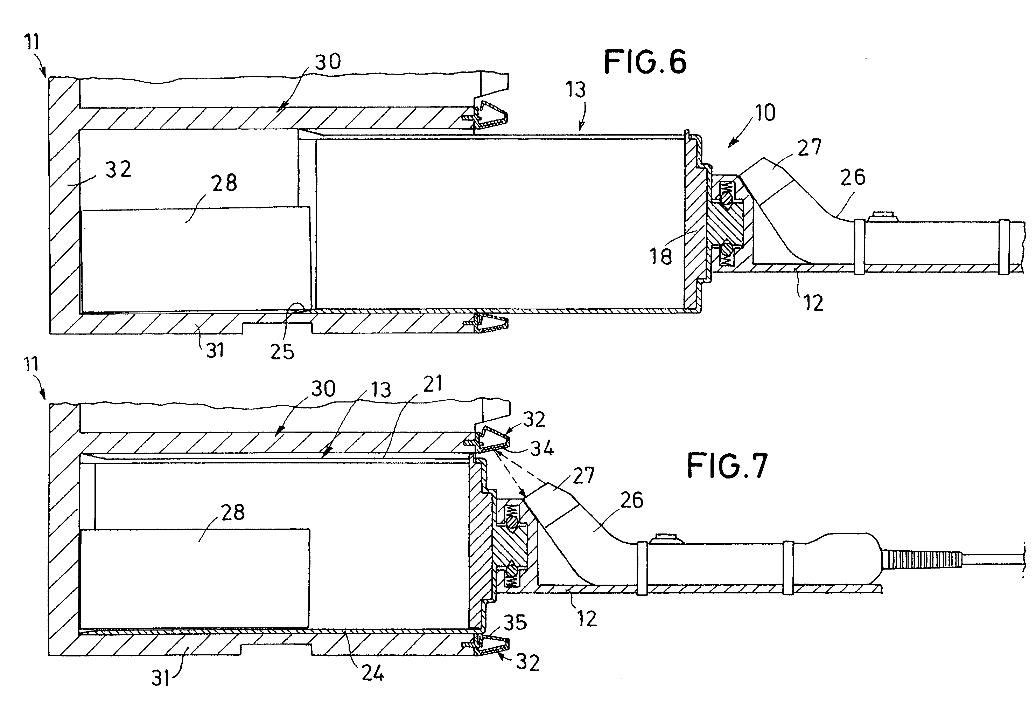

In diesem Zustand wird die Bedienungsvorrichtung 10 gemäß Fig. 6 in das Regalfach 30 eingefahren, um eine Ware 28 aus diesem Regalfach zu entnehmen. Dabei schiebt der Warenträger 13 die Ware 28 zunächst gegen die Rückwand 32, bis die Unterfahrkante 25 sich unter die Ware 28 schiebt und diese in den Warenträger aufgenommen wird. Der Schieber 18 ist beim Entnahmevorgang inaktiv.

Fig. 7 zeigt, wie der Warenträger 13 bis zum Ende in das Regalfach 30 eingeschoben wurde und die Ware 28 vollständig aufgenommen hat. Dies wird dadurch bestätigt, daß nunmehr das Schild 34 von dem Lesekopf 27 des Lesegeräts 26 gelesen wird. Auf dem Schild 34 steht die Codierung des betreffenden Regalfachs, die als Bestätigung des Entnahmevorgangs in den Computer eingegeben wird. Während des Einschiebens hat die Seitenwand 24 das Rückhalteteil 35 des darunterliegenden Profilteils 32 eingedrückt. Man erkennt, daß das Rückhalteteil 35 nur dann eingedrückt wird, wenn die Seitenwand 24 über den Fachboden 31 streift, nicht aber wenn die Seitenwand 21 über den Fachboden 31 streift.

Das erfindungsgemäße Regalsystem ist insbesondere bei Regalen für Kleinteile anwendbar, vorzugsweise für Apothekenlager, bei denen eine Vielzahl nicht-normierter Waren bzw. Packungen gelagert werden muß. Mit den Warenträgern wird eine bestimmte "Uniformierung" vorgenommen, wobei überprüft wird, ob die Ware in das betreffende Regalfach paßt. Anschließend kann die die Ware enthaltende Bedienungsvorrichtung in ein beliebiges Regalfach eingesteckt werden, weil der Computer mit Hilfe des Lesegerätes das Regalfach identifiziert und eine Zuordnung der betreffenden Ware zu dem Regalfach herstellt. Anschließend kann das Regalsystem mit einem Manipulator auf das Regalfach zugreifen und die Ware in ein anderes Regalfach überführen, wobei der Computer stets über den Verbleib der Ware informiert ist.

## Patentansprüche

1. Regalsystem mit mindestens einem Regal (11), das Fächer (30) aufweist, und einer Bedienungsvorrichtung (10) mit einem in die Fächer (30) einführbaren Warenträger (13) zum Ablegen und/oder Entnehmen von Waren, **dadurch gekennzeichnet, daß** der Warenträger (13) an seinem in ein Fach (30) einführbaren Ende eine stumpfe Stoßkante (22) und eine Unterfahrkante (25) aufweist, wobei jede dieser Kanten imstande ist, die dem Fachboden (31) benachbarte Unterkante zu bilden.

2. Regalsystem nach Anspruch 1, **dadurch gekennzeichnet, daß** der Warenträger (13) eine im wesentlichen geschlossene Hülse mit eckigem Querschnitt ist.

3. Regalsystem nach Anspruch 1 oder 2, **dadurch gekennzeichnet, daß** der Warenträger (13) und/oder das Fach (30) eine Rückhaltevorrichtung aufweisen, die beim Herausziehen des Warenträgers aus einem Fach das Zurückbewegen der Ware blokiert.

4. Regalsystem nach einem der Ansprüche 1-3, **dadurch gekennzeichnet, daß** der Warenträger (13) einen Schieber (18) enthält, der beim Herausziehen des Warenträgers aus einem Fach (30) an einem Rückhalteteil (35) des Fachs angreift und dadurch das Zurückbewegen der Ware blockiert.

5. Regalsystem nach Anspruch 4, **dadurch gekennzeichnet, daß** die Stoßkante (22) eine rückwärtige Schrägfläche (23) zum Überwinden des Rückhalteteils (35) aufweist.

6. Regalsystem nach einem der Ansprüche 1-5, **dadurch gekennzeichnet, daß** an den Fächern (30) Profilteile (32) mit maschinenlesbaren Schildern (34) derart angeordnet sind, daß ein an der Bedienungsvorrichtung (10) angebrachtes Lesegerät (26) die Beschriftung des Schildes (34) dann liest, wenn der Warenträger (13) voll in das Fach eingeschoben ist.

7. Regalsystem nach Anspruch 6, **dadurch gekennzeichnet, daß** die Profilteile (32) jeweils ein Rückhalteteil (35) in Form eines federnden Armes aufweisen, das beim Einschieben eines Warenträgers in ein Fach (30) von einem Schieber (18) des Warenträgers passiert wird, beim Zurückziehen des Warenträgers jedoch den Schieber (18) festhält.

8. Regalsystem nach einem der Ansprüche 1-7, **dadurch gekennzeichnet, daß** die Bedienungsvorrichtung (10) einen Tragarm (12) und einen an dem Tragarm drehbar befestigten Warenträger (13) aufweist, wobei der Warenträger (13) durch Drehung in bezug auf den Tragarm (12) derart positionierbar ist, daß wahlweise seine Stoßkante (22) oder seine Unterfahrkante (25) dem Fachboden (31) zugewandt ist.

9. Regalsystem nach Anspruch 8, **dadurch gekennzeichnet, daß** der Warenträger (13) an dem Tragarm (12) auswechselbar ist, und daß mehrere Größen von Warenträgern (13) vorgesehen sind.

10. Regalsystem nach einem der Ansprüche 1-9, **dadurch gekennzeichnet, daß** an der Fachöffnung ein federndes Rückhalteteil (35) angeordnet ist, welches die Ware gegen Herausfallen sichert.

## Claims

1. A shelf system comprising at least one shelf (11) including bins (30), and an operating device (10) with an article carrier (13) arranged for insertion into the bins (30) and provided for the depositing and/or removing of articles,
**characterized in that** the article carrier (13) on its end provided for insertion into a bin (30) is formed with a blunt abutment edge (22) and comprises an undertravel edge (25), each of said edges being adapted to form the bottom edge adjacent to the bottom (31) of the bin.

2. The shelf system according to claim 1, **characterized in that** the article carrier (13) comprises a substantially closed shell with an edgy cross section.

3. The shelf system according to claim 1 or 2, **characterized in that** the article carrier (13) and/or the bin (30) are provided with a retaining means arranged to block the rearward movement of the articles during withdrawal of the article carrier from a bin.

4. The shelf system according to any one of claims 1-3, **characterized in that** the article carrier (13) includes a slider (18) arranged to engage a retaining member (35) of the bin to thus block the rearward movement of the articles during withdrawal of the article carrier from a bin (30).

5. The shelf system according to claim 4, **characterized in that** the abutment edge (22) comprises a rearward oblique face (23) for overcoming the retaining member (35).

6. The shelf system according to any one of claims 1-5, **characterized in that** the bins (30) have profiled members (32) with machine-readable plates (34) provided thereon in such a manner that a reading device (26) arranged on the operating device (10) will read the lettering of the plate (34) when the article carrier (13) has been fully inserted into the bin.

7. The shelf system according to claim 6, **characterized in that** the profiled members (32) are respectively provided with a retaining member (35) formed as a resilient arm, arranged to be passed by a slider (18) of the article carrier during insertion of an article carrier into a bin (30) and to retain the slider (18) during withdrawal of the article carrier.

8. The shelf system according to any one of claims 1-7, **characterized in that** the operating device (10) comprises a carrier arm (12) and an article carrier (13) attached for rotation on the carrier arm, wherein the article carrier (13) by rotation relative to the carrier arm (12) is selectively positionable to have either its abutment edge (22) or its undertravel edge (25) facing the bottom (31) of the bin.

9. The shelf system according to claim 8, **characterized in that** the article carrier (13) on the carrier arm (12) is exchangeable and that a plurality of sizes of article carriers (13) are provided.

10. The shelf system according to any one of claims 1-9, **characterized in that** a resilient retaining member (35) is arranged on the opening of the bin for securing the articles against falling out.

## Revendications

1. Système à rayonnage comprenant au moins un rayonnage (11) présentant des casiers (30), et un dispositif de manipulation (10) comportant un support de produit (13) pouvant être introduit dans les casiers (30) pour déposer et/ou enlever des produits, **caractérisé en ce que** le support de produit (13), sur son extrémité pouvant être introduite dans un casier (30), présente un bord épais sans tranchant (22) et un bord mince (25), chacun de ces bords étant apte à constituer le bord inférieur voisin du fond du casier (31).

2. Système à rayonnage selon la revendication 1, **caractérisé en ce que** le support de produit (13) est une douille pour l'essentiel fermée ayant une section transversale polygonale.

3. Système à rayonnage selon la revendication 1 ou 2, **caractérisé en ce que** le support de produit (13) et/ou le casier (30) présentent un dispositif de retenue qui, lors de l'extraction du support de produit hors d'un casier, bloque le mouvement de retour du produit.

4. Système à rayonnage selon l'une des revendications 1-3, **caractérisé en ce que** le support de produit (13) contient un poussoir (18) qui, lors de l'extraction du support de produit hors d'un casier (30), agit sur un élément de retenue (35) du casier pour ainsi bloquer le mouvement de retour du produit.

5. Système à rayonnage selon la revendication 4, **caractérisé en ce que** le bord épais (22) présente une surface inclinée arrière (23) pour surmonter l'élément de retenue (35).

6. Système à rayonnage selon l'une des revendications 1-5, **caractérisé en ce que** des éléments profilés (32) comprenant des étiquettes (34) pouvant être lues par des machines sont disposés sur les casiers (30) de telle sorte qu'un lecteur (26) monté sur le dispositif de manipulation (10) lit les indications de l'étiquette (34) lorsque le support de produit (13) est entièrement introduit dans le casier.

7. Système à rayonnage selon la revendication 6, **caractérisé en ce que** les éléments profilés (32) présentent respectivement un élément de retenue (35) sous la forme d'un bras élastique qui, lors de l'introduction d'un support de produit dans un casier (30), est effacé par un poussoir (18) du support de produit, mais qui retient le poussoir (18) lors de l'extraction du support de produit.

8. Système à rayonnage selon l'une des revendications 1-7, **caractérisé en ce que** le dispositif de manipulation (10) comporte un bras de support (12) et un support de produit (13) fixé de manière rotative sur le bras de support, le support de produit (13) pouvant être positionné par rotation par rapport au bras de support (12) de telle sorte que, soit son bord épais (22) soit sont bord mince (25) se trouve face au fond (31) du casier.

9. Système à rayonnage selon la revendication 8, **caractérisé en ce que** le support de produit (13) sur le bras de support (12) est échangeable, et **en ce que** plusieurs tailles de supports de produits (13) sont prévues.

10. Système à rayonnage selon l'une des revendications 1-9, **caractérisé en ce que** sur l'ouverture du casier, un élément de retenue élastique (35) est disposé qui protège le produit contre les chutes.
